# EUROPEAN PATENT APPLICATION

(11) **EP 4 439 823 A1**
(43) Date of publication of application: **02.10.2024**
(21) Application number: 24152659.9
(22) Date of filing: 18.01.2024
(51) Int. Cl.: H01M 50/211, H01M 50/507, H01M 50/553

(54) **BATTERY DEVICE INCLUDING BUSBAR ASSEMBLY AND METHOD OF MANUFACTURING THE SAME**

(30) Priority: 28.03.2023 KR 20230040430
(71) Applicant: SK On Co., Ltd., Seoul 03161 (KR)
(72) Inventor: YOO, Tak Kyung, 34124 Daejeon (KR); LEE, Seung Hun, 34124 Daejeon (KR)
(74) Representative: Bird & Bird LLP

(57) **Abstract**

A battery device comprises a cell assembly including a plurality of battery cells, and a busbar assembly electrically connecting the plurality of battery cells to each other. Each of the plurality of battery cells includes an electrode assembly, a pouch including a receiving portion accommodating the electrode assembly and a sealing portion sealing at least a portion of the receiving portion, and an electrode lead connected to the electrode assembly. The sealing portion includes a first sealing portion surrounding at least a portion of the electrode lead and a second sealing portion extending from the first sealing portion, at least a portion of which is folded. The busbar assembly includes a busbar including a slit for accommodating the electrode lead, and a frame supporting the busbar and including a guide portion of which an upper region is open to guide the electrode lead to the slit.

## Description

### BACKGROUND

### 1. FIELD

The present disclosure generally relates to a battery device including a busbar assembly and a method of manufacturing a battery device including a busbar assembly.

### 2. DESCRIPTION OF RELATED ART

Unlike a primary battery, a secondary battery may be charged and discharged such that secondary battery may be applied to devices in various fields such as a digital camera, a mobile phone, a laptop, a hybrid car, an electric car, and an energy storage system (ESS). A secondary battery may include a lithium ion battery, a nickel-cadmium battery, a nickel-metal hydride battery, or a nickel-hydrogen battery.

A secondary battery may be manufactured to include flexible pouch-type battery cells or rigid prismatic or cylindrical may-type battery cells. A plurality of battery cells may be formed as a stacked cell assembly.

The cell assembly may be disposed in a module housing and may form a battery module, and a plurality of battery modules may be disposed in a pack housing and may form a battery pack.

### SUMMARY

A busbar may be used to electrically connect a plurality of battery cells to each other. For example, in a pouch-type battery cell, an electrode lead of the battery cell may be inserted into a slit of a busbar.

In a battery device in which a cell assembly, including a plurality of battery cells, is inserted in a horizontal direction with respect to a busbar assembly, an angular range of a guide portion formed on a frame of the busbar assembly may be limited. As the angular range of the guide portion decreases, the convenience of assembling the cell assembly and the busbar assembly may decrease.

In a battery device in which the busbar assembly is assembled while moving from an upper portion to a lower portion with respect to the cell assembly, a void space may be generated between a pouch of the battery cell and the frame of the busbar assembly. As a void space within the battery device increases, space efficiency and energy density of the battery device may decrease.

Some embodiments of the present disclosure are to provide a battery device in which a busbar assembly is assembled while moving from a lower portion to an upper portion with respect to a cell assembly, thereby improving space efficiency and energy density of the battery device and reducing assembly difficulty.

The battery device in embodiments may be widely applied in green technology fields such as electric vehicles, battery charging stations, and solar power generation and wind power generation using batteries. Also, the battery device and the method of manufacturing a battery device may be used in eco-friendly electric vehicles, hybrid vehicles, and the like, to prevent climate change by suppressing air pollution and greenhouse gas emissions.

In some embodiments of the present disclosure, a battery device includes a cell assembly including a plurality of battery cells; and a busbar assembly electrically connecting the plurality of battery cells to each other. Each of the plurality of battery cells includes an electrode assembly; a pouch including a receiving portion accommodating the electrode assembly and a sealing portion sealing at least a portion of the receiving portion; and an electrode lead connected to the electrode assembly. The sealing portion includes a first sealing portion surrounding at least a portion of the electrode lead and a second sealing portion extending from the first sealing portion, at least a portion of which is folded. The busbar assembly includes a busbar including a slit for accommodating the electrode lead, and a frame supporting the busbar and including a guide portion of which an upper region is open to guide the electrode lead to the slit, and wherein at least a portion of the second sealing portion is located above the frame.

The guide portion may include a chamfer extending from an upper surface of the frame.

The slit may include a first region having a first width and a second region extending from the first region and having a second width less than the first width, and the first region may be closer to an upper surface of the frame than the second region.

The cell assembly may include at least one thermal barrier located between at least a portion of the plurality of battery cells.

The frame may include a protrusion including a groove for accommodating the at least one thermal barrier.

The cell assembly may define a terrace space located between the plurality of battery cells, and at least a portion of the frame may be located in the terrace space.

The frame may include a protrusion protruding toward the receiving portion of the plurality of battery cells, and at least a portion of the protrusion may be located in the terrace space.

The second sealing portion may be located on the protrusion.

The protrusion may include a first protrusion including a first inclined surface to control expansion of the plurality of battery cells; and a second protrusion including a second inclined surface to control expansion of the plurality of battery cells and a groove for accommodating a thermal barrier.

The guide portion may include a first chamfer formed in at least a portion of the first protrusion and a second chamfer formed in at least a portion of the second protrusion.

The busbar assembly may be configured to be coupled to the cell assembly while moving from a lower portion to an upper portion of the cell assembly.

The second sealing portion may include a first surface facing an external region of the battery device, and a second surface opposite to the first surface and covering at least a portion of an upper surface of the frame.

In some embodiments of the present disclosure, a method of manufacturing a battery device includes a process of preparing a cell assembly including a plurality of battery cells, and a busbar assembly including a busbar including a slit formed therein and a frame supporting the busbar; and a process of coupling the cell assembly to the busbar assembly while moving the busbar assembly from a lower portion to an upper portion of the cell assembly.

The slit may include a first region having a first width and a second region extending from the first region and having a second width less than the first width, and an electrode lead of the plurality of battery cells may be configured to be inserted into the first region of the slit and may be inserted into the second region of the slit thereafter.

The frame may include a guide portion of which an upper region is open to guide an electrode lead of the plurality of battery cells to the slit, and the electrode lead may be configured to be in contact with the guide portion is inserted into the slit thereafter.

### BRIEF DESCRIPTION OF DRAWINGS

Certain aspects, features, and advantages of the present disclosure are illustrated by the following detailed description with reference to the accompanying drawings.
FIG. 1 is a perspective diagram illustrating a battery cell according to an embodiment of present disclosure;
FIG. 2 is a perspective diagram illustrating a battery device according to an embodiment of present disclosure;
FIG. 3 is an exploded perspective diagram illustrating a battery device according to an embodiment of present disclosure;
FIG. 4 is a perspective diagram illustrating a battery device excluding a case according to an embodiment of present disclosure;
FIG. 5 is a cross-sectional diagram taken along line I-I' in FIG. 4 according to an embodiment of present disclosure;
FIG. 6 is a diagram illustrating a battery device according to an embodiment of present disclosure, viewed from above;
FIG. 7 is a diagram illustrating a busbar assembly according to an embodiment of present disclosure, viewed from front;
FIG. 8 is a diagram illustrating a busbar assembly according to an embodiment of present disclosure, viewed from below;
FIG. 9 is a diagram illustrating a busbar assembly according to an embodiment of present disclosure, viewed from above;
FIG. 10 is a perspective diagram illustrating region A in FIG. 9 according to an embodiment of present disclosure, viewed from below; and
FIG. 11 is a flowchart illustrating a method of manufacturing a battery device according to an embodiment of present disclosure.

### DETAILED DESCRIPTION

Features of the present disclosure disclosed in this patent document are illustrated in embodiments with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure.

The following detailed description is, therefore, not to be taken in a limiting sense, and the scope of the present disclosure are defined only by appended claims, appropriately interpreted, along with the full range of equivalents to which the claims are entitled.

In the drawings, same elements will be indicated by same reference numerals. For ease of description, the same reference numerals may be used in different embodiments. That is, even when components having the same reference numerals are illustrated in a plurality of drawings, the plurality of drawings do not all refer to the same embodiment.

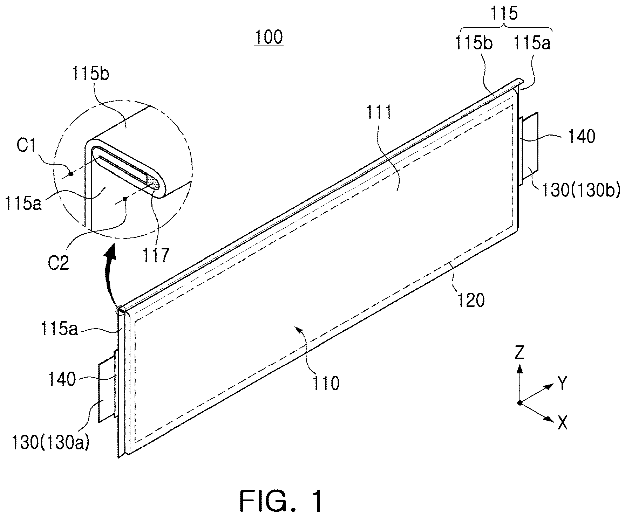

FIG. 1 is a perspective diagram illustrating a battery cell according to an embodiment.

Referring to FIG. 1, a battery cell 100 may include a pouch 110, an electrode assembly 120, and an electrode lead 130. The battery cell 100 may be configured as a secondary battery. For example, the battery cell 100 may be configured as a lithium ion battery, but an embodiment thereof is not limited thereto. For example, the battery cell 100 may be configured as a nickel-cadmium electric battery, a nickel-metal hydride battery, or a nickel-hydrogen battery which may be charged and discharged.

The pouch 110 may form at least a portion of an exterior of the battery cell 100. The pouch 110 may include an electrode receiving portion 111 for accommodating the electrode assembly 120 and a sealing portion 115 for sealing at least a portion of a circumference of the electrode receiving portion 111. The electrode receiving portion 111 may provide a space for accommodating the electrode assembly 120 and electrolyte solution.

The sealing portion 115 may be formed by bonding at least a portion of the circumference of the pouch 110. The sealing portion 115 may be formed in the form of a flange extending outwardly from the electrode receiving portion 111, which is formed in the form of a container, and may be disposed along at least a portion of an outer region of the electrode receiving portion 111. In an embodiment, the sealing portion 115 may include a first sealing portion 115a in which the electrode lead 130 is disposed and a second sealing portion 115b in which the electrode lead 130 is not disposed. A portion of the electrode lead 130 may be drawn out or exposed externally of the pouch 110. In the position in which the electrode lead 130 is drawn out, the electrode lead 130 may be covered by the insulating film 140 in order to increase a sealing degree of the first sealing portion 115a and to secure an electrical insulation state. The insulating film 140 may be formed as a thinner film material having a thickness smaller than that of the electrode lead 130, and may be attached to both surfaces of the electrode lead 130.

In an embodiment, the electrode lead 130 may be disposed to face opposite directions on both sides of the battery cell 100 in the length direction (Y-axis direction). For example, the electrode lead 130 may include a positive lead 130a having a first polarity (e.g., anode) facing one side (e.g., first direction (+Y direction)) of the battery cell 100 in the length direction, and a negative lead 130b having a second polarity (e.g., cathode) toward the other side (e.g., second direction (-Y direction)) in the length direction. In the embodiment illustrated in FIG. 1, the sealing portion 115 may include two first sealing portions 115a in which the electrode lead 130 is disposed and one second sealing portion 115b in which the electrode lead 130 is not disposed.

The direction in which electrode lead 130 is disposed may be selectively designed. In an embodiment (e.g., FIG. 1), the electrode lead 130 may include a positive lead 130a and a negative lead 130b disposed in an opposite direction to the positive lead 130a with respect to the electrode assembly 120. In FIG. 1, the electrode leads 130 disposed on both sides of the battery cell 100 in the length direction (e.g., Y-axis direction) to face opposite directions is illustrated, but the structure of the electrode lead 130 is not limited thereto. For example, two electrode leads 130 may be arranged substantially parallel in the length direction (e.g., Y-axis direction) of the battery cell 100.

The pouch 110 is not limited to the structure in which a sealing portion 115 is formed on three sides by folding a sheet of exterior material as illustrated in FIG. 1.

In an embodiment, at least a portion of the sealing portion 115 may be configured to be folded at least once. By folding at least a portion of the sealing portion 115, bonding reliability of the sealing portion 115 may be improved and the area of the sealing portion 115 may be reduced. The second sealing portion 115b in which the electrode lead 130 of the sealing portion 115 according to the embodiment is not disposed may be folded twice and may be fixed by the adhesive member 117. For example, the second sealing portion 115b may be folded 180° along a first bending line C1 and may be folded again along a second bending line C2. In this case, the second sealing portion 115b may be filled with the adhesive member 117.

The angle at which the second sealing portion 115b is bent or the number of times the second sealing portion 115b is bent may be varied. For example, in an embodiment not illustrated, the second sealing portion 115b may be folded at 90° with respect to the first sealing portion 115a.

The electrode assembly 120 may include an anode plate, a cathode plate, and a separator. The separator may prevent contact between the anode plate and the cathode plate. The electrode assembly 120 may be manufactured by a variety of methods (e.g., stacked, jelly roll, or Z-folded).

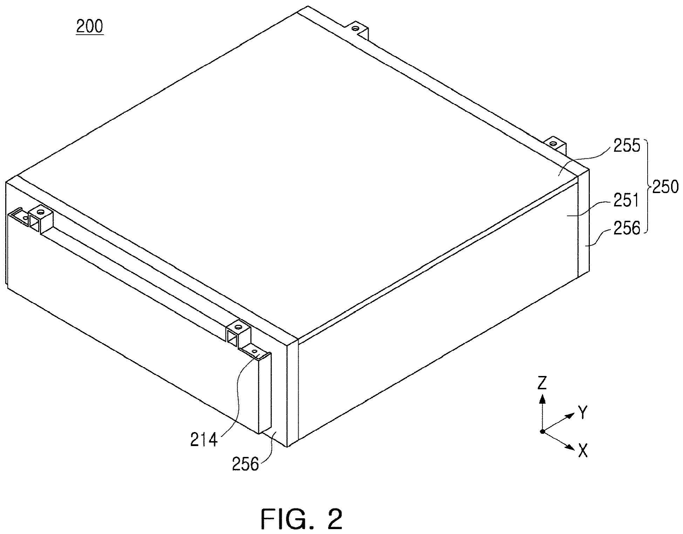

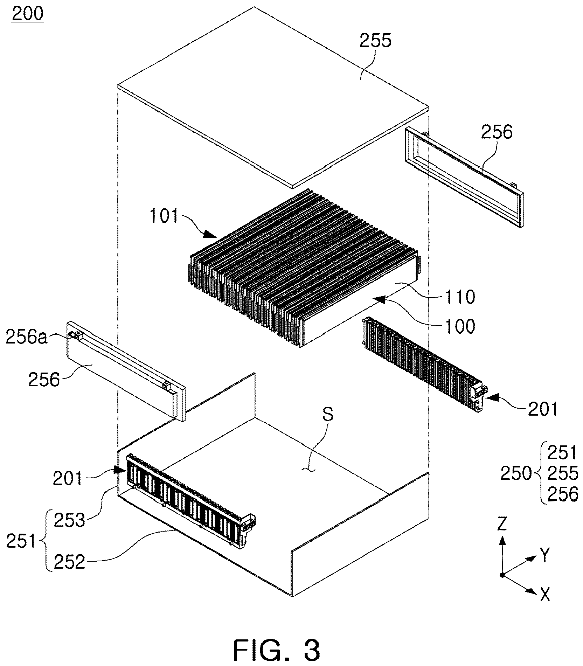

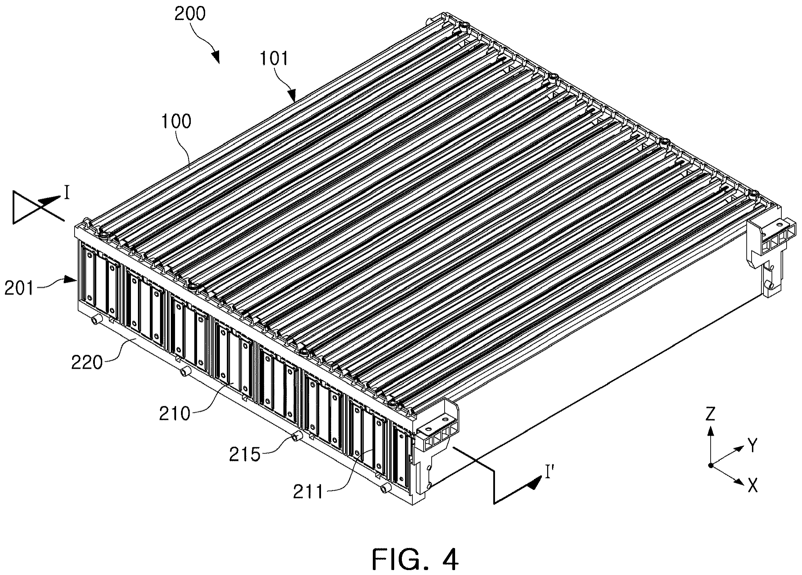

FIG. 2 is a perspective diagram illustrating a battery device according to an embodiment. FIG. 3 is an exploded perspective diagram illustrating a battery device according to an embodiment. FIG. 4 is a perspective diagram illustrating a battery device excluding a case according to an embodiment.

Referring to FIGS. 2, 3, and/or 4, a battery device 200 may include a cell assembly 101, a busbar assembly 201, and a case 250. The cell assembly 101 may include a plurality of battery cells 100. The description of the battery cell 100 in FIG. 1 may be applied to the battery cell 100 in FIGS. 3 and 4.

The battery device 200 in an embodiment may be a battery module or a battery pack.

The cell assembly 101 may have a substantially hexahedral shape. In an embodiment, the cell assembly 101 may be referred to as a cell stack. In an embodiment, the cell assembly 101 may include a plurality of battery cells 100 connected to each other using an adhesive tape.

The busbar assembly 201 may include an electrically conductive busbar 210 electrically connected to the electrode lead 130 of the battery cell 100 and a frame 220 supporting the busbar 210. The frame 220 may be referred to as a support plate or a busbar frame. The frame 220 may be formed of an electrically insulating material (e.g., polymer). At least a portion of the frame 220 may be disposed between the cell assembly 101 and the busbar 210 and may support the busbar 210. The frame 220 may include at least one coupling hole 215 for accommodating coupling components (e.g., screws, rivets, and/or a boss structure). By the coupling component, the frame 220 may be coupled to a portion (e.g., an end plate 256) of the case 250. The shape of busbar assembly 201 illustrated in FIGS. 3 and 4 may be optional. For example, the shape of busbar 210 included in busbar assembly 201 may be selectively varied.

The busbar assembly 201 may include at least one connection terminal 214 for electrical connection to an external entity. The electrode lead 130 of the battery cell 100 may be electrically connected to an external entity of the battery device 200 through the busbar 210 and a connection terminal 214. For example, the connection terminal 214 may be connected to the busbar 210 through a wire or conductive structure (not illustrated), and a current of the battery cell 100 may be transmitted to an external entity of the battery device 200 through the busbar 210 and the connection terminal 214. The connection terminal 214 may be exposed externally of the case 250 through the hole 256a of the end plate 256.

The case 250 may form an accommodation space S for accommodating the cell assembly 101 and/or the busbar assembly 201. For example, the case 250 may include a cover 255 covering the cell assembly 101 and a receiving portion 251 surrounding a lower surface and a side surface of the cell assembly 101. The receiving portion 251 may include a main plate 252 covering a lower surface of the cell assembly 101 and a plurality of sidewall members 253 covering at least a portion of side surfaces of the cell assembly 101. At least a portion of the accommodation space S may be surrounded by a main plate 252, a sidewall member 253 and the end plate 256. According to the embodiment, the main plate 252 and the sidewall member 253 may be integrated with each other.

The case 250 may include an end plate 256 covering a portion of a side surface of the cell assembly 101. In an embodiment, the end plate 256 may be connected to both ends of the main plate 252 and the sidewall member 253 in the length direction (e.g., Y-axis direction). The end plate 256 may cover a portion of a side surface of the cell assembly 101 and the busbar assembly 201. The end plate 256 may include a hole 256a for accommodating the electrode lead 130.

According to the embodiment, the case 250 may be formed of a material having high thermal conductivity, such as metal. For example, the case 250 may be formed of aluminum. However, the material of the case 250 is not limited thereto. According to another embodiment, the case 250 may be formed of polymer. The case 250 may be referred to as a housing, a module housing, or a module case.

For ease of description, a portion of components are not provided or are exaggerated in an embodiment. For example, the position of connection terminal 214 and/or the number of battery cell 100 may be designed to be optional. In an embodiment not illustrated, the battery device 200 may include a conductive member (e.g., a long busbar) to adjust the position of the connection terminal 214.

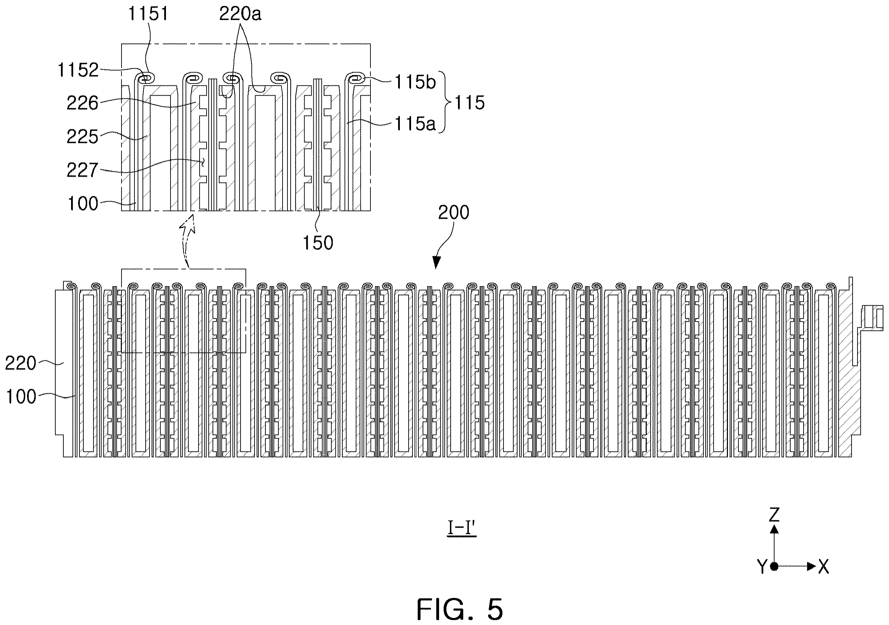

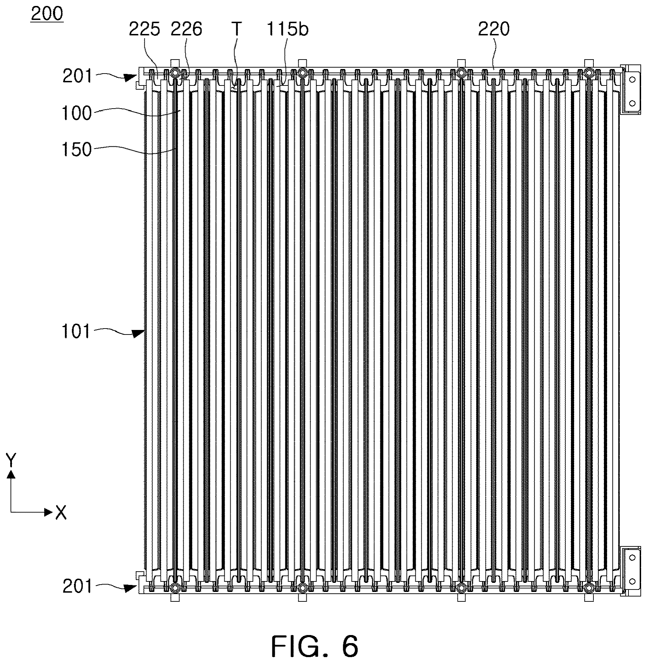

FIG. 5 is a cross-sectional diagram taken along line I-I' in FIG. 4 according to an embodiment. FIG. 6 is a diagram illustrating a battery device 200 according to an embodiment, viewed from above.

Referring to FIGS. 5 and 6, the battery device 200 may include a cell assembly 101 including a plurality of battery cells 100, and a busbar assembly 201 including a busbar 210 and a frame 220. The descriptions of the battery cell 100, the cell assembly 101, the busbar 210, the frame 220 and/or the busbar assembly 201 in FIGS. 1 to 4 may be applied to the battery cell 100, the cell assembly 101, the busbar 210, the frame 220 and/or the busbar assembly 201 in FIG. 5.

According to the embodiment, the busbar assembly 201 may be assembled in the cell assembly 101 while moving in the height direction (e.g., Z-axis direction) of the cell assembly 101. For example, the busbar assembly 201 may be assembled while moving from a lower portion (e.g., -Z direction) to an upper portion (e.g., +Z direction) of the cell assembly 101. When described with respect to the cell assembly 101, the cell assembly 101 may be assembled to the busbar assembly 201 while moving from an upper portion (+Z direction) of the busbar assembly 201 to a lower portion (-Z direction).

The cell assembly 101 may be assembled to the busbar assembly 201 while moving from the upper portion (+Z direction) to the lower portion (-Z direction) of the busbar assembly 201, such that the second sealing portion 115b of the battery cell 100 may be disposed above the frame 220. For example, the second sealing portion 115b may be disposed above the upper surface 220a of the frame 220. The second sealing portion 115b may include a first surface 1151 facing an external region of the battery device 200 and a second surface 1152 opposite the first surface 1151 and facing an upper surface 220a of the frame 220. By disposing the second sealing portion 115b above the upper surface 220a of the frame 220, space utilization and/or energy density of the battery device 200 may be improved. In an embodiment, the second sealing portion 115b may be spaced apart from the upper surface 220a of frame 220.

The battery device 200 may include a thermal barrier 150. For example, the cell assembly 101 may include the thermal barrier 150. In an embodiment, the thermal barrier 150 may be configured as a plate, a partition, or a sheet disposed between at least a portion of the plurality of battery cells 100. The thermal barrier 150 may be connected to the battery cell 100 using adhesive tape. The thermal barrier 150 may reduce heat transferred from one battery cell 100 to another battery cell 100. For example, the thermal barrier 150 may include mica. Heat transfer or thermal runaway of the battery device 200 may be reduced by the thermal barrier 150.

The frame 220 may include a guide portion 230 for guiding the assembly of the cell assembly 101. The guide portion 230 may guide the insertion of the cell assembly 101 into the busbar assembly 201. For example, the guide portion 230 may guide the electrode lead 130 of the battery cell 100 to the slit 211 of the busbar 210.

An upper region of the guide portion 230 may be open. For example, the guide portion 230 may be configured as a groove and/or a recess formed in an upper surface 220a of the frame 220.

The guide portion 230 may include chamfers 231 and 232 extending from the upper surface 220a of the frame 220. The chamfers 231 and 232 may extend from ends 221 and 222 of the upper surface 220a. For example, the chamfers 231 and 232 may include a first chamfer 231 extending from the first end 221 of the first protrusion 225 and a second chamfer 232 extending from the second end 222 of the second protrusion 226.

The angle between the chamfers 231 and 232 and the upper surface 220a may be varied depending on the design.

Insertion of the cell assembly 101 into the busbar assembly 201 may be easily performed by the guide portion 230. For example, when the electrode lead 130 is inserted into the busbar assembly 201, the electrode lead 130 may be in contact with at least a portion (e.g., chamfer 231, 232) of the guide portion 230, and may be inserted into the slit 211 of the busbar 210. As the electrode lead 130 is in contact with the chamfers 231 and 232 at an angle, force or pressure transmitted to the electrode lead 130 due to collision between the electrode lead 130 and the frame 220 may be reduced, and damage to the electrode lead 130 of the guide portion 230 may be reduced.

According to the embodiment, when the battery cell 100 is expanded, the frame 220 may include at least one protrusion 225 or 226 for controlling the expansion size of the battery cell 100. The protrusions 225 and 226 may protrude toward the pouch 110 of the battery cell 100. For example, the protrusions 225 and 226 may protrude toward the electrode receiving portion 111 of the pouch 110.

The protrusions 225 and 226 may include a first protrusion 225 for controlling expansion of the battery cell 100 and/or a second protrusion 226 for controlling expansion of the battery cell 100 and accommodating the thermal barrier 150. The first protrusion 225 may include at least one first inclined surface 225a to constrain the maximum displacement of the battery cell 100 when the battery cell 100 expands. The second protrusion 226 may include at least one second inclined surface 226a to constrain the maximum displacement of the battery cell 100 when the battery cell 100 expands. The second protrusion 226 may include a groove 227 for accommodating the thermal barrier 150. The thermal barrier 150 may be surrounded by at least a portion of the second protrusion 226 in a state in which an end thereof is inserted into the groove 227. According to the embodiment, the first protrusion 225 and the second protrusion 226 may be arranged alternately. The arrangement structure of the first protrusion 225 and the second protrusion 226 may be selectively designed with respect to the number of thermal barriers 150 mounted on the battery device 200.

The cell assembly 101 may define a terrace space T disposed between the plurality of battery cells 100. The terrace space T may be understood as a void space formed between a battery cell 100 and another battery cell 100 adjacent to the battery cell 100, and/or a void space formed between a battery cell 100 and the thermal barrier 150 adjacent to the battery cell 100.

At least a portion of frame 220 may be disposed in the terrace space T. For example, at least a portion of the protrusions 225 and 226 of the frame 220 may be disposed in the terrace space T. By disposing at least a portion of the frame 220 in the terrace space T, the void space of the battery device 200 may be reduced, thereby improving space utilization and/or energy density of the battery device 200.

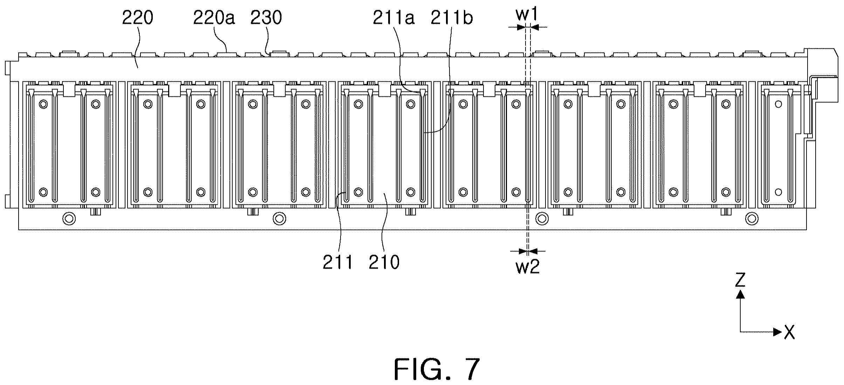

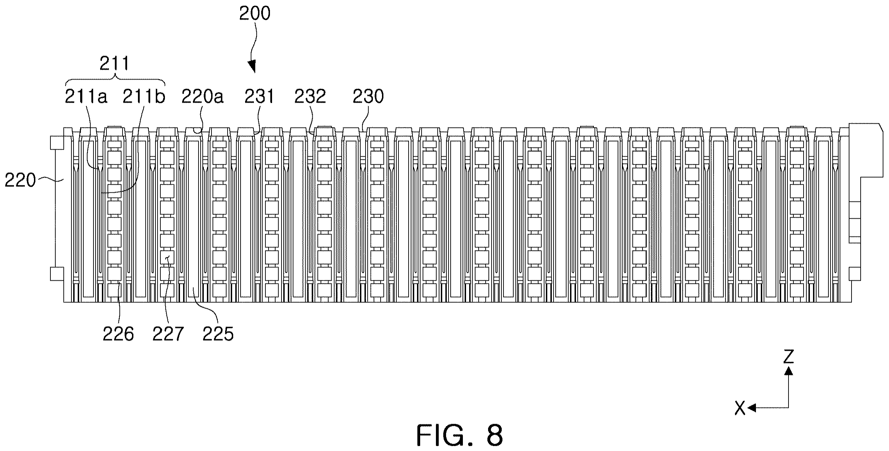

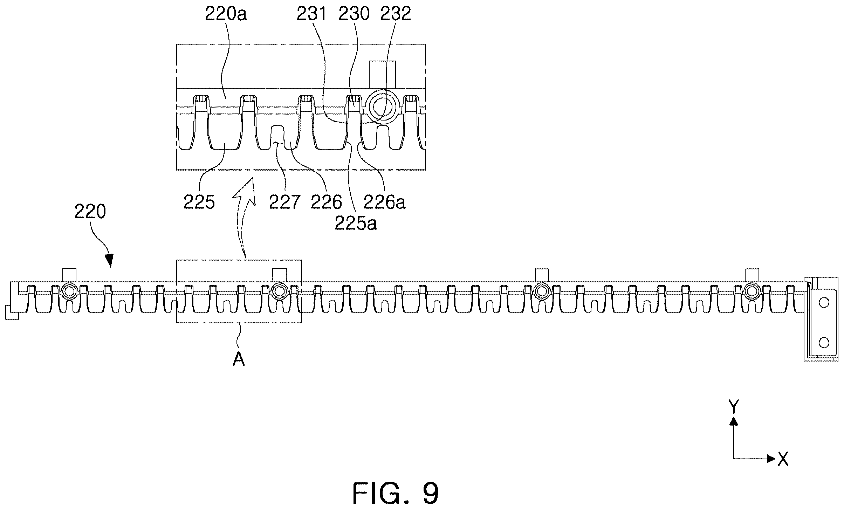

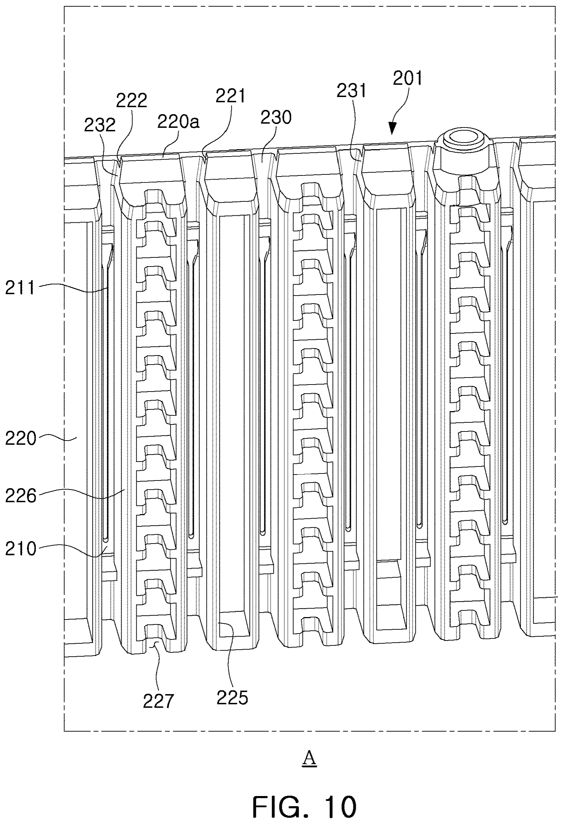

FIG. 7 is a diagram illustrating a busbar assembly according to an embodiment, viewed from front. FIG. 8 is a diagram illustrating a busbar assembly according to an embodiment, viewed from below. FIG. 9 is a diagram illustrating a busbar assembly according to an embodiment, viewed from above. FIG. 10 is a perspective diagram illustrating region A in FIG. 9 according to an embodiment, viewed from below.

Referring to FIGS. 7, 8, 9, and/or 10, a busbar assembly 201 may include a busbar 210 and a frame 220. The description of the busbar 210 and the frame 220 in FIGS. 4, 5, and/or 6 may be applied to the busbar 210 and the frame 220 in FIGS. 7, 8, 9, and/or 10.

The busbar 210 may include at least one slit 211 for accommodating an electrode lead (e.g., the electrode lead 130 in FIG. 1) of a battery cell (e.g., the battery cell 100 in FIG. 1). For example, while the electrode lead 130 is inserted into the slit 211, the battery cell 100 may be electrically connected to the busbar 210.

According to the embodiment, the slit 211 may include a first region 211a having a first width W1 and a second region 211b extending from the first region 211a and having a second width W2. The first width W1 may be larger than the second width W2. By forming the width of the first region 211a of the slit 211 to be larger than the width of the second region 211b, assembly of the cell assembly (e.g., cell assembly 101 in FIG. 3) to the busbar assembly 201 may be improved. For example, when the cell assembly 101 is inserted into the busbar assembly 201, the electrode lead 130 may be inserted into the first region 211a of the slit 211 and may be inserted into the second region 211b of the slit 211 thereafter. Since the first width W1 of the first region 211a is formed to be larger than the second width W2 of the second region 211b, the first region 211a may guide the insertion of the electrode lead 130.

According to the embodiment, the first region 211a may be disposed closer to the upper surface 220a of the frame 220 than the second region 211b. For example, the first region 211a may be referred to as an upper region of the slit 211, and the second region 211b may be referred to as a lower region of the slit 211.

The guide portion 230 may be formed in the frame 220. According to the embodiment, at least a portion of the guide portion 230 may be formed in protrusions 225 and 226 of the frame 220. For example, the guide portion 230 may include chamfers 231 and 232 extending from the upper surface 220a of the frame 220.

The chamfers 231 and 232 may include the first chamfer 231 formed in the first protrusion 225 of the frame 220 and the second chamfer 232 formed in the second protrusion 226 of the frame 220. For example, at least a portion of the first chamfer 231 may be formed on at least a portion of an edge of the first protrusion 225, and at least a portion of the second chamfer 232 may be formed on at least a portion of an edge of the second protrusion 226.

According to the embodiment, inclined surfaces 225a and 226a of the protrusions 225 and 226 may extend from the chamfers 231 and 232. For example, the first inclined surface 225a of the first protrusion 225 may extend from the first chamfer 231. The second inclined surface 226a of the second protrusion 226 may extend from the second chamfer 232.

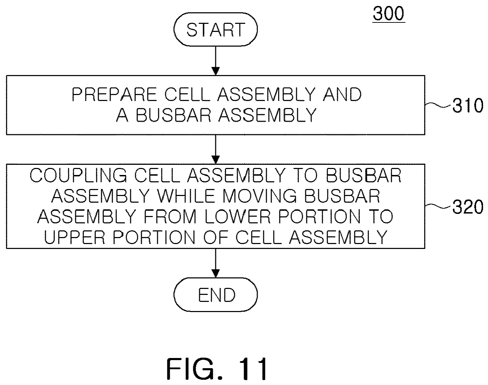

FIG. 11 is a flowchart illustrating a method of manufacturing a battery device according to an embodiment.

Referring to FIG. 11, a method of manufacturing a battery device 300 may include a process 310 of preparing a cell assembly and a busbar assembly, and a process 320 of assembling the busbar assembly and the cell assembly while moving the busbar assembly from a lower portion to an upper portion of the cell assembly.

The method of manufacturing a battery device 300 in FIG. 11 may be the method of manufacturing a battery device 200 in FIGS. 2 to 6. For example, the process 310 of preparing the cell assembly and the busbar assembly may include a process of preparing the battery cell 100 including the electrode lead 130 illustrated in FIGS. 2 to 6, and/or the cell assembly 101 including the thermal barrier 150 in FIG. 5 and the busbar assembly 201 including the frame 220 including the busbar 210 and the guide portion 230.

The process 320 of assembling the busbar assembly 201 and the cell assembly 101 may including a process of inserting the electrode lead 130 of the plurality of battery cells 100 into the slit 211 of the busbar 210 while moving the busbar assembly 201 from a lower portion to an upper portion of the cell assembly 101.

According to the embodiment, the electrode lead 130 may be inserted into the slit 211 of the busbar 210 while moving from the upper portion to the lower portion of the slit 211. For example, the electrode lead 130 may be inserted into the first region 211a of the slit 211 and may be inserted into the second region 211b of the slit 211 thereafter.

According to the embodiment, the guide portion 230 of the frame 220 may guide the insertion of the electrode lead 130. For example, at least a portion of the electrode lead 130 may be inserted into the slit 211 after being in contact with the guide portion 230. The guide portion 230 may include chamfers 231 and 232 to guide the insertion of the electrode lead 130. By the chamfers 231 and 232, assembly of the cell assembly 101 and the busbar assembly 201 may be improved.

According to the aforementioned embodiments, space efficiency and energy density of the battery device may be improved.

Also, difficulty of production process of the battery device may be reduced, and a defect rate of the produced battery device may be reduced.

Only specific examples of implementations of certain embodiments are described. Variations, improvements and enhancements of the disclosed embodiments and other embodiments may be made with respect to the disclosure of this patent document.

## Claims

1. A battery device, comprising:
a cell assembly including a plurality of battery cells; and
a busbar assembly electrically connecting the plurality of battery cells to each other,
wherein each of the plurality of battery cells includes:
an electrode assembly;
a pouch including a receiving portion accommodating the electrode assembly and a sealing portion sealing at least a portion of the receiving portion; and
an electrode lead connected to the electrode assembly,
wherein the sealing portion includes a first sealing portion surrounding at least a portion of the electrode lead and a second sealing portion extending from the first sealing portion, at least a portion of which is folded,
wherein the busbar assembly includes:
a busbar including a slit for accommodating the electrode lead, and
a frame supporting the busbar and including a guide portion of which an upper region is open to guide the electrode lead to the slit, and
wherein at least a portion of the second sealing portion is located above the frame.

2. The battery device of claim 1, wherein the guide portion includes a chamfer extending from an upper surface of the frame.

3. The battery device of claims 1 or 2,
wherein the slit includes a first region having a first width and a second region extending from the first region and having a second width less than the first width, and
wherein the first region is closer to an upper surface of the frame than the second region.

4. The battery device of any one of preceding claims, wherein the cell assembly includes at least one thermal barrier located between at least a portion of the plurality of battery cells.

5. The battery device of claim 4, wherein the frame includes a protrusion including a groove for accommodating the at least one thermal barrier.

6. The battery device of any one of preceding claims,
wherein the cell assembly defines a terrace space located between the plurality of battery cells, and
wherein at least a portion of the frame is located in the terrace space.

7. The battery device of claim 6,
wherein the frame includes a protrusion protruding toward the receiving portion of the plurality of battery cells, and
wherein at least a portion of the protrusion is located in the terrace space.

8. The battery device of claim 7, wherein the second sealing portion is located on the protrusion.

9. The battery device of claim 7, wherein the protrusion includes:
a first protrusion including a first inclined surface to control expansion of the plurality of battery cells; and
a second protrusion including a second inclined surface to control expansion of the plurality of battery cells and a groove for accommodating a thermal barrier.

10. The battery device of claim 9, wherein the guide portion includes a first chamfer formed in at least a portion of the first protrusion and a second chamfer formed in at least a portion of the second protrusion.

11. The battery device of any one of preceding claims, wherein the busbar assembly is configured to be coupled to the cell assembly while moving from a lower portion to an upper portion of the cell assembly.

12. The battery device of any one of preceding claims, wherein the second sealing portion includes a first surface facing an external region of the battery device, and a second surface opposite to the first surface and covering at least a portion of an upper surface of the frame.

13. A method of manufacturing a battery device, the method comprising:
a process of preparing a cell assembly including a plurality of battery cells, and a busbar assembly including a busbar including a slit formed therein and a frame supporting the busbar; and
a process of coupling the cell assembly to the busbar assembly while moving the busbar assembly from a lower portion to an upper portion of the cell assembly.

14. The method of claim 13,
wherein the slit includes a first region having a first width and a second region extending from the first region and having a second width less than the first width, and
wherein an electrode lead of the plurality of battery cells is configured to be inserted into the first region of the slit and is inserted into the second region of the slit thereafter.

15. The method of claims 13 or 14,
wherein the frame includes a guide portion of which an upper region is open to guide an electrode lead of the plurality of battery cells to the slit, and
wherein the electrode lead is configured to be in contact with the guide portion is inserted into the slit thereafter.
